# EUROPEAN PATENT SPECIFICATION

(11) **EP 3 208 993 B1**
(45) Date of publication and mention of the grant of the patent: **06.04.2022**
(21) Application number: 17156563.3
(22) Date of filing: 16.02.2017
(51) Int. Cl.: H04W 8/20, H04W 36/00, H04L 29/06, H04M 15/00

(54) **METHODS CIRCUITS DEVICES SYSTEMS AND FUNCTIONALLY ASSOCIATED COMPUTER EXECUTABLE CODE TO SUPPORT EDGE COMPUTING ON A COMMUNICATION NETWORK**
VERFAHREN, SCHALTUNGEN, SYSTEM UND FUNKTIONAL ASSOZIIERTER COMPUTERAUSFÜHRBARER CODE ZUR UNTERSTÜTZUNG VON EDGE-COMPUTING IN EINEM KOMMUNIKATIONSNETZWERK
PROCÉDÉ, SYSTÈMES DE DISPOSITIFS À CIRCUITS ET CODE EXÉCUTABLE PAR ORDINATEUR ASSOCIÉ FONCTIONNELLEMENT POUR PRENDRE EN CHARGE L'INFORMATIQUE PÉRIPHÉRIQUE DANS UN RÉSEAU DE COMMUNICATION

(30) Priority: 16.02.2016 US 201662295522 P; 16.02.2016 US 201662295521 P
(43) Date of publication of application: 23.08.2017
(73) Proprietor: Saguna Networks Ltd., 20692 Yokneam Illit (IL)
(72) Inventor: Frydman, Daniel Nathan, 32447 Haifa (IL); Fite, Lior, 2010400 Zurit (IL)
(74) Representative: Smith, Jeremy Robert

(56) References cited:
- VODAFONE: "Impact on Lawful Interception of Mobile Edge Computing", 3GPP DRAFT; LI IMPACT OF MEC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3 22 October 2014 (2014-10-22), XP050895700, Retrieved from the Internet: URL:http://www.3gpp.org/ftp/tsg_sa/WG3_Sec urity/TSGS3_LI/2014_55_Portland/ [retrieved on 2014-10-22]
- SAGUNA NETWORKS LTD: "MEC Application use-case from Saguna for enterprise connectivity;MEC(15)000048_MEC_Application _use-case_from_Saguna_for_enterprise_conne cti", ETSI DRAFT; MEC(15)000048_MEC_APPLICATION_USE-CASE_FRO M_SAGUNA_FOR_ENTERPRISE_CONNECTI, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - MEC, 11 March 2015 (2015-03-11) , pages 1-3, XP014226589, [retrieved on 2015-03-11]

## Description

### FIELD OF THE INVENTION

The present invention generally relates to the field of wireless communication. More specifically, the present invention relates to methods, circuits, devices, systems and functionally associated computer executable code to support edge computing on a communication network, such as a wireless access communication network.

### BACKGROUND

Since 2009, when for the first time the volume of data traffic over mobile network exceeded that of voice traffic, mobile data has more or less tripled each year in volume thus taking over more and more of the mobile traffic in volume. In addition, machine-to-machine solutions are maturing throughout vertical industries and as the emerging number of wireless sensors (grow exponentially over the next 10 years) which are key enablers to many mission-critical scenarios, from smarter traffic to video analytics, the issue just grows. Wireless sensors are expected to grow in their numbers exponentially over the next 10 years. On the profitability side mobile data opens new revenue possibilities to the MNOs. A major obstacle standing before the MNOs is their inability to connect to the content thus suffering from the Over The Top (OTT) syndrome. In addition, many of the applications generate data that withholds inflexible requirement on the way traffic should be served over the network. In order to enable adequate user experience, the data must be supplied to the UE according to strict bit-rate requirements. Any deviations from these requirements automatically lead to lousy experience thus to the abandonment of this service by consumers. This leads to the need for a solution which on one hand will ensure enhanced user experience when consuming data while presenting new revenue streams to the MNOs, and on the other hand will not degrade the network behavior and will not lead to unjustified expenses for the end users. The solutions that are being driven to the market are around the mobile edge computing/cloud, where virtualized infrastructure/cloud is integrated into the mobile RAN, enabling deploying services at the edge of the mobile network. This creates a new challenge for operators as now content and application are being provided to end users directly from within the RAN, without the network core elements having any visibility of the data. A solution needs to be provided so that LI, which is currently happening adjacent to the network core, will continue working transparently. Furthermore, a solution needs to be provided so that charging, which is currently happening adjacent to the network core, will continue working transparently. Document VODAFONE: "Impact an Lawful Interception of Mobile Edge Computing", 3GPP DRAFT; LI IMPACT OF MEC, 3RD GENERATION PARTNERSHIP PROJECT (3GPP), vol. SA WG3 22 October 2014 (2014-10-22), XP050895700, Retrieved from the Internet: URL:http://www.3gpp.org/ftp/tsg_sa /WG3_Security/TSGS3_LI/2014_55_Portland/ [retrieved an 2014-10-22] discloses some technical issues of communication between wireless devices.

### SUMMARY OF INVENTION

The present invention includes a communication network per claim 1 and corresponding method of operating a communication network per claim 7. Preferred embodiments of the invention are found in the dependent claims. network edge segment or zone also including processing or computing resources may be referred to as a network edge computing zone or segment. An edge computing resource of a specific network edge segment may run one or more server applications that provide data services to client applications running on a mobile communication device connected to an access node of the specific network edge segment, or to an access node of a network edge segment in communicative proximity. Connectivity to the internet and/or to an external network may also be referred to as a data service in accordance with the present invention.

A network edge computing resource within a network edge computing zone may run or otherwise provide data services such as an application engine/server services, zone specific DNS services, an internet breakout gateway, etc. Information about the amount and/or nature of edge computing services being provided to a network client (mobile communication) device receiving services from a network edge computing resource/platform may be forwarded to the network core, for example through a communication link between the network edge and the network core. An Edge Processing Connectivity Manager (EPCM) according to embodiments of the present invention may select, copy, and forward data passing between an edge computing resource and a connected client device. The EPCM may include or be otherwise functionally associated with one or more monitoring modules which may monitor, intercept, copy and/or generate information characterizing data services being provided by the edge computing resources. The EPCM may include or be otherwise functionally associated with one or more management or control modules which may monitor and may control or regulate data services being provided by edge computing resources, optional in accordance with instructions from one or more network elements at the network core. The EPCM may also include or be otherwise functionally associated with a secure data link gateway for establishing a secure data link between a respective network processing edge segment/zone and the network core.

A network according to embodiments of the present invention may include one or more monitoring and/or one or more management modules to monitor and/or manage the network edge computing platform and/or the data services being provided by the computing resources to a mobile communication device connected to a related network access node. The monitoring and/or management modules, which may be integral or otherwise associated with an EPCM. According to yet further embodiments, the network may include a communication link between management modules running at an edge segment of the network and one or more monitoring and/or one or more management elements operating at or near the network core, thereby providing visibility, and optionally control, of the edge computing services being provided to mobile communications devices. According to some embodiments, a secure communication link between each of one or more network edge zones and a network core may be established through each of one or more gateways, located at network edge zones and at least one located at the network core. The information passing through the gateway and link may include copies of actual data sent to and/or received from the client mobile communication device. According to further embodiments, the information may include characterizations of data and/or data services provided to the client mobile communication device from one or more network edge computing resources. Data passing through a link according to embodiments of the present invention may include random data generated in order to obfuscate the source of data passing through the link. The data link between the network edge segment and elements at the network core may be a secure link for transporting actual payload data and/or fake data between the network edge and the core, optionally in an encrypted form. The secure data link may also include an encoder configured to de-correlate an instantaneous bitrate of the datalink bit-stream from an actual payload bitrate, thereby obfuscating the data sources of the data being carried over the data link.

### BRIEF DESCRIPTION OF THE FIGURES

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
Fig. 1A is a block level network diagram illustrating a communication network according to embodiments of the present invention;
Fig. 1B is a network element level diagram illustrating a wireless access (cellular) communication network in accordance with embodiments of the present invention;
Fig. 2 is a functional block diagram of a network edge connectivity manager in accordance with embodiments of the present invention managing data flow of data related to data services provided by edge computing resources and associated gateways;
Fig. 3 is a functional block diagram of an edge computing data gateway in accordance with embodiments of the present invention; and
Fig. 4 is data flow diagram for a specific Legal Inspection embodiment of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE FIGURES

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

Unless specifically stated otherwise, as apparent from the following discussions, it is appreciated that throughout the specification discussions utilizing terms such as "processing", "computing", "calculating", "determining", or the like, may refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

In addition, throughout the specification discussions utilizing terms such as "storing", "hosting", "caching", "saving", or the like, may refer to the action and/or processes of 'writing' and 'keeping' digital information on a computer or computing system, or similar electronic computing device, and may be interchangeably used. The term "plurality" may be used throughout the specification to describe two or more components, devices, elements, parameters and the like.

Some embodiments of the invention, for example, may take the form of an entirely hardware embodiment, an entirely software embodiment, or an embodiment including both hardware and software elements. Some embodiments may be implemented in software, which includes but is not limited to firmware, resident software, microcode, or the like.

Furthermore, some embodiments of the invention may take the form of a computer program product accessible from a computer-usable or computer-readable medium providing program code for use by or in connection with a computer or any instruction execution system. For example, a computer-usable or computer-readable medium may be or may include any apparatus that can contain, store, communicate, propagate, or transport the program for use by or in connection with the instruction execution system, apparatus, or device.

In some embodiments, the medium may be an electronic, magnetic, optical, electromagnetic, infrared, or semiconductor system (or apparatus or device) or a propagation medium. Some demonstrative examples of a computer-readable medium may include a semiconductor or solid state memory, magnetic tape, a removable computer diskette, a random access memory (RAM), a read-only memory (ROM), any composition and/or architecture of semiconductor based Non-Volatile Memory (NVM), any composition and/or architecture of biologically based Non-Volatile Memory (NVM), a rigid magnetic disk, and an optical disk. Some demonstrative examples of optical disks include compact disk - read only memory (CD-ROM), compact disk - read/write (CD-R/W), and DVD.

In some embodiments, a data processing system suitable for storing and/or executing program code may include at least one processor coupled directly or indirectly to memory elements, for example, through a system bus. The memory elements may include, for example, local memory employed during actual execution of the program code, bulk storage, and cache memories which may provide temporary storage of at least some program code in order to reduce the number of times code must be retrieved from bulk storage during execution.

In some embodiments, input/output or I/O devices (including but not limited to keyboards, displays, pointing devices, etc.) may be coupled to the system either directly or through intervening I/O controllers. In some embodiments, network adapters may be coupled to the system to enable the data processing system to become coupled to other data processing systems or remote printers or storage devices, for example, through intervening private or public networks. In some embodiments, modems, cable modems and Ethernet cards are demonstrative examples of types of network adapters. Other functionally suitable components may be used.

More specifically, the present invention includes methods, circuits, devices, systems and functionally associated computer executable code to support edge computing on a communication network, such as a wireless access communication network. According to embodiments of the present invention, there may be provided a data network including: (a) at least one network core with one or more network elements to perform each of one or more network management functionalities; and (b) at least one network edge segment or zone, wherein an edge segment may include one or more access nodes, including wireless access node, through which a client communication device may connect to the network. The at least one network edge segment or zone may also include or be otherwise functionally associated with edge computing resources and/or computing platform(s), such as, for example one or more network edge servers. A network edge segment or zone also including processing or computing resources may be referred to as a network edge computing zone or segment. An edge computing resource of a specific network edge segment may run one or more server applications that provide data services to a client applications running on a mobile communication device connected to an access node of the specific network edge segment, or to an access node of a network edge segment in communicative proximity. Connectivity to the internet and/or to an external network may also be referred to as a data service in accordance with the present invention.

According to some embodiments of the present invention, a network edge computing resource within a network edge computing zone may run or otherwise provide data services such as an application engine/server services, zone specific DNS services, an internet breakout gateway, etc. Information about the amount and/or nature of edge computing services being provided to a network client (mobile communication) device receiving services from a network edge computing resource/platform may be forwarded to the network core, for example through a communication link between the network edge and the network core. An Edge Processing Connectivity Manager (EPCM) according to embodiments of the present invention may select, copy, and forward data passing between an edge computing resource and a connected client device. The EPCM may include or be otherwise functionally associated with one or more monitoring modules which may monitor, intercept, copy and/or generate information characterizing data services being provided by the edge computing resources. The EPCM may include or be otherwise functionally associated with one or more management or control modules which may monitor and may control or regulate data services being provided by edge computing resources, optionally in accordance with instructions from one or more network elements at the network core. The EPCM may also include or be otherwise functionally associated with a secure data link gateway for establishing a secure data link between a respective network processing edge segment/zone and the network core.

A network according to embodiments of the present invention may include one or more monitoring and/or one or more management modules to monitor and/or manage the network edge computing platform and/or the data services being provided by the computing resources to a mobile communication device connected to a related network access node. The monitoring and/or management modules, which may be integral or otherwise associated with an EPCM, According to yet further embodiments, the network may include a communication link between management modules running at an edge segment of the network and one or more monitoring and/or one or more management elements operating at or near the network core, thereby providing visibility, and optionally control, of the edge computing services being provided to mobile communications devices. According to some embodiments, a secure communication link between a network edge zone and a network core may be established through gateways, at least one located at the network edge zone and another located at the network core. The information passing through the gateway and link may include copies of actual data sent to and/or received from the client mobile communication device. According to further embodiments, the information may include characterizations of data and/or data services provided to the client mobile communication device from one or more network edge computing resources. Data passing through a link according to embodiments of the present invention may include random data generated in order to obfuscate the source of data passing through the link. The data link between the network edge segment and elements at the network core may be a secure link for transporting actual payload data and/or fake data between the network edge and the core, optionally in an encrypted form. The secure data link may also include an encoder configured to de-correlate an instantaneous bitrate of the datalink bit-stream from an actual payload bitrate, thereby obfuscating the data sources of the data being carried over the data link.

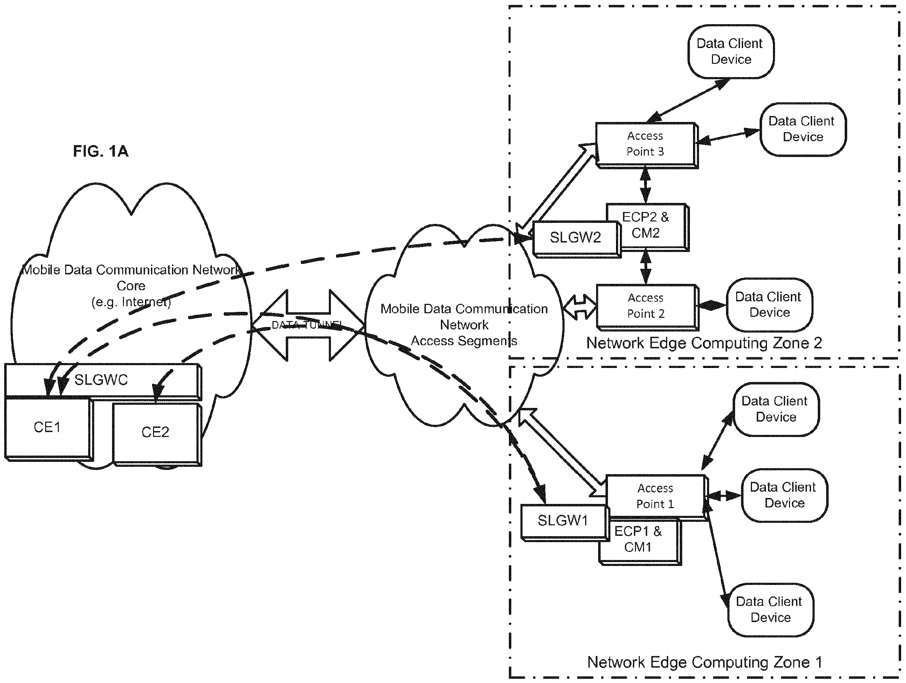

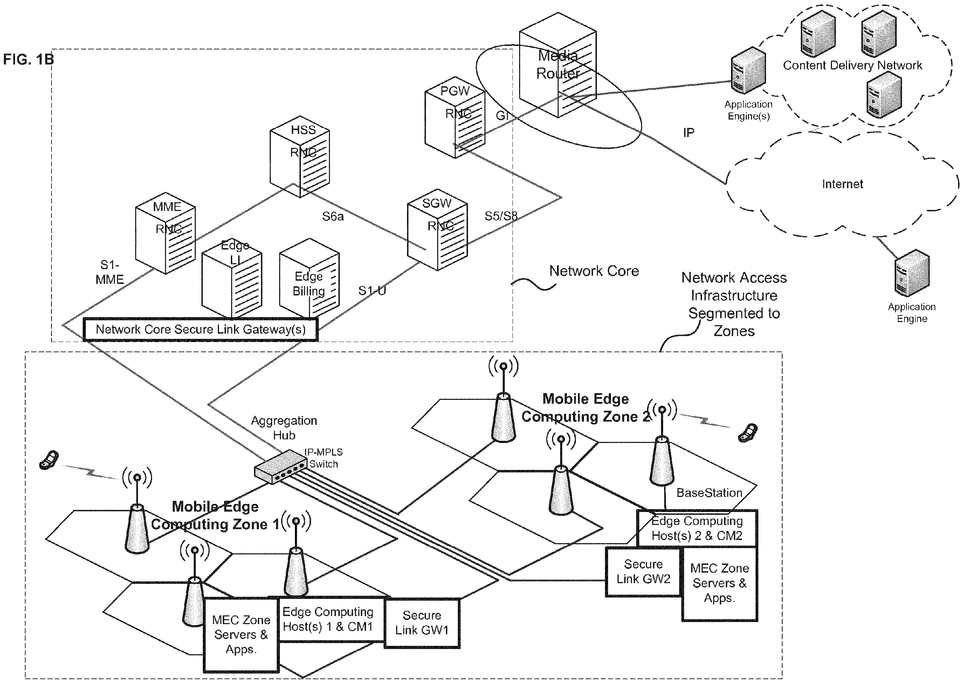

Turning now to Fig. 1A, there is shown a block level network diagram illustrating an exemplary communication network according to embodiments of the present invention. The communication network includes a network core with exemplary network core elements 1 and 2, each of which core elements might perform one of several possible network management tasks, including client billing, Legal Inspection (e.g.), client device authentication, client device access management to network services, etc. The exemplary network also includes two network edge computing zones, 1 and 2, each of which includes network access points, edge computing platforms (EPC1 and EPC2), and Connectivity Managers (CM1 and CM2). Each edge computing zone also includes a secure link gateway (SLGW1 and SLGW2) to provide a secure data link between a respective zone and the core. Fig. 1B is a network element level diagram illustrating a wireless access (cellular) communication network in accordance with embodiments of the present invention. It shows a specific cellular network embodiment of the exemplary network of Fig 1A, where the access points are cellular wireless access points and the core network elements are clearly shown as billing and Legal Inspection network elements.

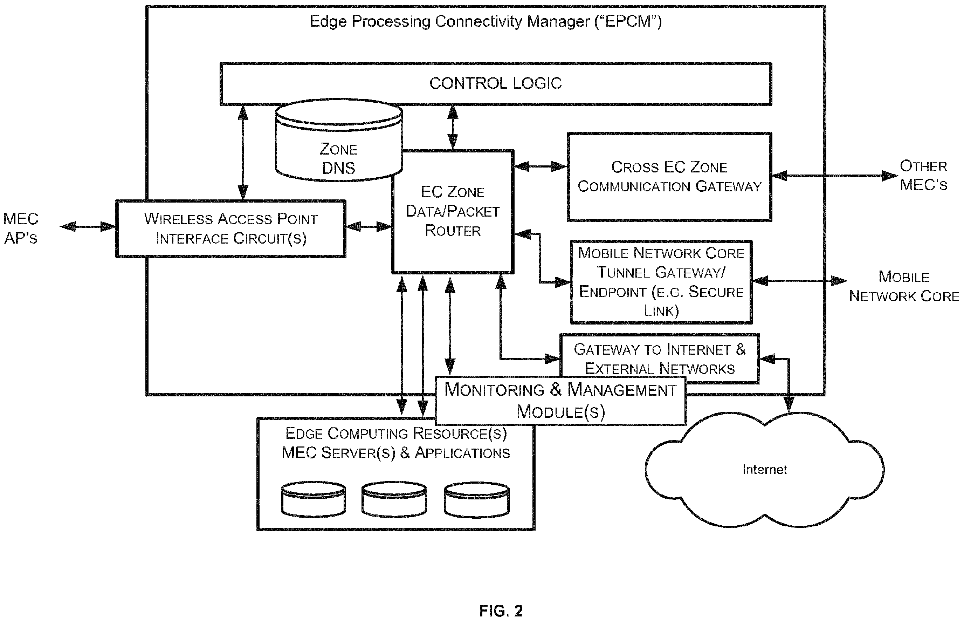

Turning now to Fig. 2, there is shown a functional block diagram of a network edge processing connectivity manager (EPCM) in accordance with embodiments of the present invention, wherein the EPCM manages data flow of data related to data services provided by edge computing resources and associated network gateways. The EPCM includes interfaces to: (a) associated network access points and their respective client devices; (b) associated edge computing resources, and (c) gateways to the network core and other network segments. The EPCM may also include an interface to an internet breakout gateway. The EPCM may also include gateways to other network edge segments or zones.

The EPCM according to the embodiment of Fig. 2 includes Control logic controlling an edge computing data/packet router to regulate data flow between edge computing resources and client devices communicatively coupled to associated access points, wireless or otherwise. The EPCM Control Logic working in conjunction with one or more monitoring modules may also send copies and/or characterizations of data flowing between edge computing resources and client devices towards the network core via a secure data link established via a secure link gateway.

The EPCM according to Fig. 2 also includes edge computing monitoring modules to collect and/or characterize data services provide by edge computing resources to commutatively coupled data client devices. The EPCM may selectively collect and send edge data to the core, for example in response to a request from a network element at the network core. Edge data for monitoring, copying, characterizing and sending may be selected according to categories such as: (a) client device identifier, (b) data service type, (c) external data source identifier, (d) detected content characteristic, and (e) any combination of the four. Alternatively, the EPCM may be programmed to provide copies and/or characterizations of all data exchanged between edge computing resources and client devices communicatively coupled to access points of the respective network edge.

The EPCM according to Fig. 2 also includes edge computing management modules to monitor and regulate services provide by edge computing resources to commutatively coupled data client devices. The EPCM may selectively monitor, manage and/or report back on data edge services, for example in response to a request from a network element at the network core. Edge computing service management may be performed according to parameters such as: (a) client device identifier, (b) edge data service source, (c) external data source identifier, (d) detected content characteristic, and (e) any combination of the four. Alternatively, the EPCM may be pre-programmed to monitor and manage a fixed set of edge computing resources and client devices communicatively coupled to access points of the respective network edge.

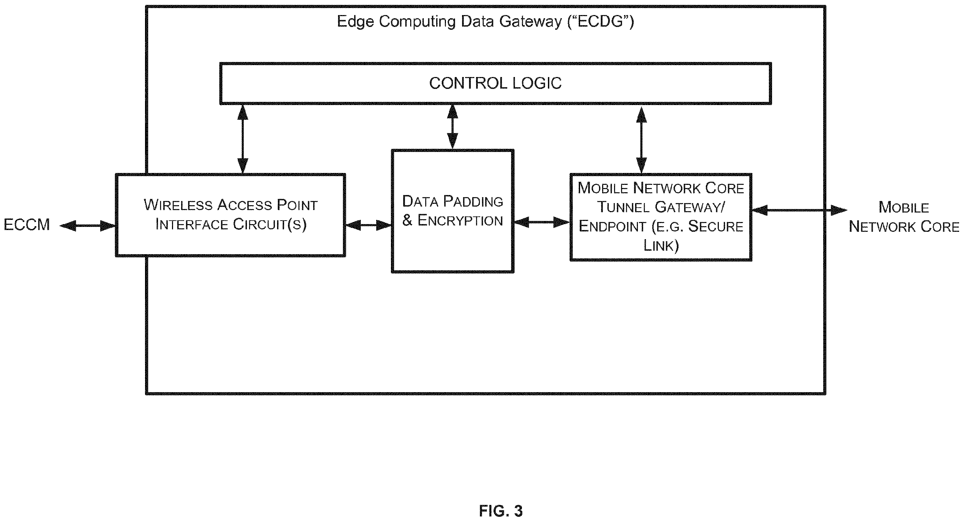

Turning now to Fig. 3, there is shown a functional block diagram of an edge computing secure data link gateway in accordance with embodiments of the present invention. The gateway includes an interface to the network edge segment or zone and an interface to a communication channel to the network core. The communication channel to the network core may be any type of IP tunnel known for use to interconnect cellular access nodes to a cellular network core. The gateway includes data encryption/decryption functionality, in the form of circuits and/or modules, to encrypt and secure from interception data exchanged between the edge segment/zone and the network core. The gateway includes data padding functionality, in the form of circuits and/or modules, to pad and de-correlate a transmission bitrate from a payload bit rate. According to some embodiments, the decorrelation of the payload bitrate and the transmission bitrate is configured to obfuscate a source of payload data being transmitted through the gateway and associated communication link, for example, the de-correlation may be performed by padding the transmission bit-stream with fake or dummy bits such that the transmission bitrate is maintained substantially constant over some period of time. Such de-correlation would obfuscate or hide which communicatively coupled client device generated and/or received payload data which is currently passing through the link.

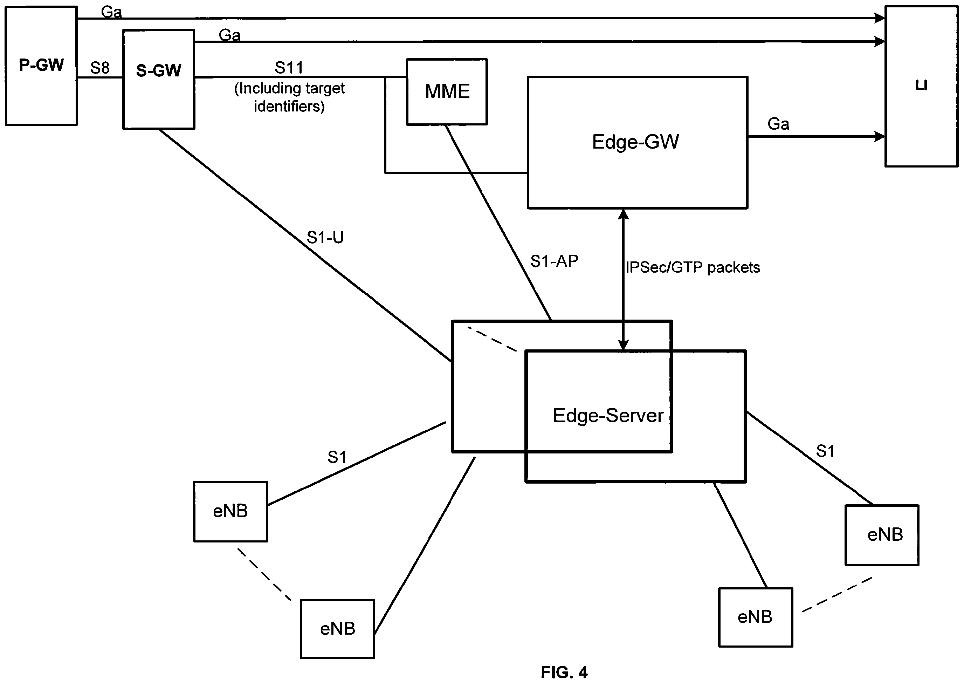

Turning now to Fig. 4, there is shown a data flow diagram for a specific Legal Inspection (LI) embodiment of the present invention for supporting LI of data services provided from inside a network edge zone or radio access network (RAN). LI is a security process in which a service provider or network operator collects and provides law enforcement officials with intercepted communications of private individuals or organizations. It is required that all traffic received to any chosen individual may be intercepted according to the request of the enforcement officials. LI implementation is required by the European Union International User Requirements 19951 which allows for LI to prevent crime, including fraud and terrorism. LI inspection and data/information sharing is performed at a network core element. As part of implementing the LI solution within a network which provides applications and/or content to end-users from within the edge/RAN, the shown embodiment supports existing LI solutions in a transparent manner. The shown embodiment enables existing LI systems to "have vision" of anything that is being supplied from the edge cloud directly to the end-users. The illustrated solution includes an Edge-GateWay (EG) and Edge-Servers (ESs). The ESs are nodes located in the Edge/RAN that support the hosting of applications inside the RAN in a fully transparent way to the mobile network. The EG is a node located adjacent to the network core that ensures all core functionalities (LI, charging, policy, mobility etc.) continue working transparently. The ESs pass all required data towards the EG whenever such relevant data is provided from the ESs directly to the end users (thus not visible to the network core) in one of 2 modes: (a) Passive mode - all user traffic is sent up (the ESs each send all the traffic provided to all the end users towards the EG, regardless any specific request/configuration from the EG); and (b) .Active mode - only selected traffic is sent up (the ESs each send only the traffic provided to specific end users towards the EG. These end users are the ones the legal authorities specifically request to inforce LI upon.).

According to the embodiment for Fig. 4, the EG may receive relevant target identifiers from a network mobile management entity (MME) or any other authorized entity and pair this information with the data flows received from the ESs to manage the traffic of each individual target. Target identifiers may include: (a) IMSI - International Mobile Subscriber Identity; (b) IMEI - International Mobile Equipment Identity; (c) MSISDN - Mobile Subscriber Integrated Services Digital Network Number; (d) IPv4 address; (e) IPv6 address; (f) EMAIL; (g) DN; (h) ACCOUNT; (i) SIPURI; (j) TELURL; (k) PSTN; and (I) MAC.

Since a requirement of LI is that no end-user that is under LI surveillance will be able to identify this in any way, including by tapping the network and identifying that the traffic that is being sent to them is also being duplicated towards the core, the embodiment of Fig. 4 includes a random throughput encrypted stream of data continually sent from each ES to the EG. This stream will contain legal packets of random data. As long as the ES has relevant data to send it will send it. During idle times (no data exists for sending), the ES will generate a random stream of "garbage" data and will send it to the EG in a fluctuating bit rate.

## Claims

1. A communication network comprising:
at least one network core with one or more network elements to perform each of one or more network management functions; and
at least one network edge segment including: (a) one or more access nodes through which a client communication device is adapted to connect to the communication network, (b) at least one edge computing resource adapted to run - one or more service applications that provide data services to a client application running on a client communication device connected to an access node, and (c) a secure link gateway to convey to the core network elements information about data services provided by the at least one edge computing resource to connected client devices, **characterized in that** the gateway includes data padding functionality, adapted to decorrelate a transmission bitrate from a payload bitrate by padding the transmission bitstream with fake or dummy bits such that the transmission bitrate is maintained substantially constant over some period of time, wherein the bitstream is passing through the link and the bitstream is received and/or generated by a communicatively coupled client device.

2. The communication network of claim 1, wherein said at least one edge computing resource provides data services selected from the group consisting of: (a) application server data, (b) content server data, (c) data storage services, and (d) internet gateway services.

3. The communication network according to claim 1, wherein said at least one of said or more network elements to perform each of one or more network management functions performs Legal Inspection.

4. The communication network according to claim 3, wherein said at least one network edge includes edge computing monitoring modules to intercept, copy and send to said network core data generated by said edge computing resource.

5. The communication network according to claim 4, wherein said edge computing monitoring modules is configured to intercept, copy and send to said network core data received by said edge computing resource.

6. The communication network according to claim 5, wherein said edge computing monitoring module performs selective data interception or bulk data interception.

7. A method of operating a communication network, said method comprising:
running at a network core one or more network elements to perform each of one or more network management functions; and
at an network edge segment including (a) one or more access nodes through which a client communication device connects to the communication network and (b) at least one edge computing resource running one or more service applications that provide data services to a client application running on a client communication device connected to an access node, and (c) a secure link gateway conveying to the core network elements information about data services provided by the at least one edge computing resource to connected client devices, **characterized in that** conveying information to the core network elements includes data padding, and that the data padding decorrelates a transmission bitrate from a payload bitrate by padding the transmission bitstream with fake or dummy bits such that the transmission bitrate is maintained substantially constant over some period of time, wherein the bitstrean is passing through the link and the bitstream is received and/or generated by a communicatively coupled client device.

8. The method of claim 7, wherein provided data services are selected from the group consisting of: (a) application server data, (b) content server data, (c) data storage services, and (d) internet gateway services.

9. The method of claim 7, wherein the one network management functions performs at the network core is Legal Inspection.

10. The method of claim 9, further including intercepting, copying and sending to said network core data generated by the edge computing resource.

11. The method of claim 10, further including intercepting, copying and sending to the network core data received by the edge computing resource.

12. The method of claim 11, further comprising selective data interception.

13. The method of claim 12, further comprising bulk data interception.

## Patentansprüche

1. Ein Kommunikationsnetzwerk umfassend:
mindestens einen Netzwerkkern mit einem oder mehreren Netzwerkelementen, um jede von einer oder mehreren Netzwerkmanagementfunktionen auszuführen; und
mindestens ein Netzwerk-Edge-Segment mit: (a) einem oder mehreren Zugangsknoten, über die eine Client-Kommunikationseinrichtung mit dem Kommunikationsnetzwerk verbindbar ist, (b) mindestens eine Edge-Computing-Ressource, durch die eine oder mehrere Dienstanwendungen ausführbar sind, die Datendienste für eine Client-Kommunikationseinrichtung bereitstellen, die mit einem Zugangsknoten verbunden ist, und (c) ein Secure-Link-Gateway, um den Netzwerkkernelementen Informationen über Datendienste zu übermitteln, die von der mindestens einen Edge-Computing-Ressource für angeschlossene Client-Einrichtungen bereitgestellt werden, **dadurch gekennzeichnet, dass** das Gateway eine Datenanreicherungsfunktion enthält, die ausgebildet ist, um eine Übertragungs-Bitrate von einer Nutzlast-Bitrate durch Anreichern des Übertragungs-Bitstroms mit falschen Bits oder Dummy-Bits zu dekorrelieren, so dass die Übertragungs-Bitrate über eine gewisse Zeitspanne im Wesentlichen konstant gehalten wird, wobei der Bitstrom den Link durchläuft und der Bitstrom von einer kommunikativ gekoppelten Client-Einrichtung empfangen und/oder erzeugt wird.

2. Kommunikationsnetzwerk nach Anspruch 1, wobei die mindestens eine Edge-Computing-Ressource Datendienste bereitstellt, die ausgewählt sind aus der Gruppe bestehend aus: (a) Anwendungsserverdaten, (b) Inhaltsserverdaten, (c) Datenspeicherdienste und (d) Internet-Gateway-Dienste.

3. Kommunikationsnetzwerk nach Anspruch 1, wobei das mindestens eine der oder mehr Netzwerkelemente zur Durchführung jeder der einen oder mehreren Netzwerkmanagementfunktionen eine Rechtsprüfung durchführt.

4. Kommunikationsnetzwerk nach Anspruch 3, wobei die mindestens eine Netzwerk-Edge Edge-Computing-Überwachungsmodule enthält, um von der Edge-Computing-Ressource erzeugte Daten abzufangen, zu kopieren und an den Netzwerkkern zu senden.

5. Kommunikationsnetzwerk nach Anspruch 4, wobei das Edge-Computing-Überwachungsmodul so konfiguriert ist, dass es die von der Edge-Computing-Ressource empfangenen Daten abfängt, kopiert und an den Netzwerkkern sendet.

6. Kommunikationsnetzwerk nach Anspruch 5, wobei das Edge-Computing-Überwachungsmodul ein selektives Abfangen von Daten oder ein Abfangen von Massendaten durchführt.

7. Verfahren zum Betreiben eines Kommunikationsnetzwerks, wobei das Verfahren umfasst:
Ausführen von einem oder mehreren Netzwerkelemente an einem Netzwerkkern, um jeweils eine oder mehrere Netzwerkmanagementfunktionen auszuführen; und
an einem Netzwerk-Edge-Segment, das (a) einen oder mehrere Zugangsknoten, über die eine Client-Kommunikationseinrichtung mit dem Kommunikationsnetzwerk verbunden ist, und (b) mindestens eine Edge-Computing-Ressource enthält, auf der eine oder mehrere Dienstanwendungen laufen, die Datendienste für eine Client-Kommunikationseinrichtung bereitstellen, die auf einer mit einem Zugangsknoten verbundenen Kundenkommunikationseinrichtung läuft, und (c) ein Secure-Link-Gateway, das den Netzwerkkernelementen Informationen über Datendienste übermittelt, die von der mindestens einen Edge-Computing-Ressource für angeschlossene Client-Einrichtungen bereitgestellt werden, **dadurch gekennzeichnet, dass** das Übermitteln von Informationen an die Netzwerkkernelemente ein Datenanreichern beinhaltet, und dass das Datenanreichern eine Übertragungsbitrate von einer Nutzlastbitrate abgrenzt, indem der Übertragungsbitstrom mit falschen Bits oder Dummy-Bits aufgefüllt wird, so dass die Übertragungsbitrate über eine gewisse Zeitspanne im Wesentlichen konstant gehalten wird, wobei der Bitstrom den Link durchläuft und der Bitstrom von einer kommunikativ gekoppelten Client-Vorrichtung empfangen und/oder erzeugt wird.

8. Verfahren nach Anspruch 7, wobei die bereitgestellten Datendienste ausgewählt sind aus der Gruppe bestehend aus: (a) Anwendungsserverdaten, (b) Inhaltsserverdaten, (c) Datenspeicherdienste und (d) Internet-Gateway-Dienste.

9. Verfahren nach Anspruch 7, wobei die Netzwerkmanagementfunktion, die am Netzwerkkern ausgeführt wird, eine Rechtsprüfung ist.

10. Verfahren nach Anspruch 9, das ferner das Abfangen, Kopieren und Senden von durch die Edge-Computing-Ressource erzeugten Daten an den Netzwerkkern umfasst.

11. Verfahren nach Anspruch 10, das ferner das Abfangen, Kopieren und Senden von Daten an den Netzwerkkern umfasst, die von der Edge-Computing-Ressource empfangen wurden.

12. Verfahren nach Anspruch 11, das ferner selektives Abfangen von Daten umfasst.

13. Verfahren nach Anspruch 12, das ferner das Abfangen von Massendaten umfasst.

## Revendications

1. Un réseau de communication comprenant :
au moins un cœur de réseau avec un ou plusieurs éléments de réseau pour exécuter chacune d'une ou plusieurs fonctions de gestion de réseau ; et
au moins un segment de périphérie de réseau comprenant : (a) un ou plusieurs noeuds d'accès à travers lesquels un dispositif de communication client est adapté pour se connecter au réseau de communication, (b) au moins une ressource informatique périphérique adaptée pour exécuter une ou plusieurs applications de service qui fournissent des services de données à une application client s'exécutant sur un dispositif de communication client connecté à un noeud d'accès, et (c) une passerelle de liaison sécurisée pour transmettre aux éléments du coeur du réseau des informations sur les services de données fournis par là au moins une ressource informatique périphérique aux dispositifs clients connectés, **caractérisé en ce que** la passerelle comprend une fonctionnalité de remplissage de données, adaptée pour décorréler un débit binaire de transmission d'un débit binaire de charge utile en remplissant le flux binaire de transmission avec des bits faux ou factices de sorte que le débit binaire de transmission soit maintenu sensiblement constant sur une certaine période de temps, dans lequel le flux binaire passe par la liaison et le flux binaire est reçu et/ou généré par un dispositif client couplé de manière communicative.

2. Le réseau de communication de la revendication 1, dans lequel ladite au moins une ressource informatique périphérique fournit des services de données sélectionnés dans le groupe constitué de : (a) les données de serveur d'application, (b) les données de serveur de contenu, (c) les services de stockage de données, et (d) les services de passerelle internet.

3. Le réseau de communication de la revendication 1, dans lequel ledit au moins un desdits ou plusieurs éléments de réseau pour réaliser chacune d'une ou plusieurs fonctions de gestion de réseau réalise une inspection légale.

4. Le réseau de communication de la revendication 3, dans lequel ledit au moins un bord de réseau comprend des modules de surveillance d'informatique périphérique pour intercepter, copier et envoyer audit cœur de réseau des données générées la ressource informatique périphérique.

5. Le réseau de communication de la revendication 4, dans lequel lesdits modules de surveillance informatique périphérique sont configurés pour intercepter, copier et envoyer au cœur de réseau des données reçues par la ressource informatique périphérique.

6. Le réseau de communication de la revendication 5, dans lequel ledit module de surveillance informatique de périphérie effectue une interception sélective de données ou une interception de données en masse.

7. Procédé de fonctionnement d'un réseau de communication, ladite procédé comprenant :
l'exécution au niveau d'un cœur de réseau d'un ou plusieurs éléments de réseau pour exécuter chacune d'une ou plusieurs fonctions de gestion de réseau ; et
au niveau d'un segment de périphérie de réseau comprenant (a) un ou plusieurs noeuds d'accès par l'intermédiaire desquels un dispositif de communication client se connecte au réseau de communication et (b) au moins une ressource informatique périphérique exécutant une ou plusieurs applications de service qui fournissent des services de données à une application client exécutée sur un dispositif de communication client connecté à un noeud d'accès, et (c) une passerelle de liaison sécurisée transportant vers les éléments du coeur de réseau des informations concernant les services de données fournis par là au moins une ressource informatique périphérique aux dispositifs clients connectés, **caractérisé en ce que** l'acheminement d'informations vers les éléments du réseau central comprend le remplissage de données, et **en ce que** le remplissage de données décorrèle un débit binaire de transmission à partir d'un débit binaire de charge utile en remplissant le flux binaire de transmission avec des bits faux ou factices de sorte que le flux binaire de transmission est maintenu sensiblement constant sur une certaine période de temps, dans lequel le flux binaire passe par la liaison et le train binaire est reçu et/ou généré par un dispositif client couplé de manière communicative.

8. Procédé de la revendication 7, dans laquelle les services de données fournis sont sélectionnés dans le groupe constitué de : (a) les données de serveur d'application, (b) les données de serveur de contenu, (c) les services de stockage de données, et (d) les services de passerelle Internet.

9. Procédé de la revendication 7, dans laquelle l'une des fonctions de gestion de réseau exécutées au cœur de réseau est l'inspection légale.

10. Procédé de la revendication 9, comprenant en outre l'interception, la copie et l'envoi audit cœur de réseau de données générées par la ressource informatique périphérique.

11. Procédé de la revendication 10, comprenant en outre l'interception, la copie et l'envoi au cœur de réseau de données reçues par la ressource informatique périphérique.

12. Procédé de la revendication 11, comprenant en outre l'interception sélective de données.

13. Procédé de la revendication 12, comprenant en outre l'interception de données en masse. 13.
